# FASCICULE DE BREVET EUROPEEN

(11) **EP 1 363 354 B1**
(45) Date de publication et mention de la délivrance du brevet: **26.10.2005**
(21) Numéro de dépôt: 03291039.0
(22) Date de dépôt: 29.04.2003
(51) Int. Cl.: H01Q 1/32, B60R 25/00, G07C 9/00

(54) **Véhicule muni d'un dispositif de transmission de signaux embarqué**
Fahrzeug mit einer Vorrichtung zur Übertragung von Signalen
Vehicle equipped with a device for transmitting signals

(30) Priorité: 14.05.2002 FR 0205897
(43) Date de publication de la demande: 19.11.2003
(73) Titulaire: Delphi Technologies, Inc., Troy, MI 48007 (US)
(72) Inventeur: Lelandais, Guy, 91190 Gif-sur-Yvette (FR)
(74) Mandataire: Abello, Michel

(56) Documents cités:
- WO-A-97/16331
- FR-A- 2 786 030
- FR-A- 2 808 125
- US-A- 4 873 530

## Description

La présente invention concerne les véhicules, notamment les véhicules automobiles, du type comportant un espace intérieur délimité par des parois et un dispositif de transmission de signaux embarqué destiné à communiquer avec un dispositif récepteur portatif pour mettre en oeuvre un procédé de commande à distance.

Au sens de l'invention, l'espace intérieur du véhicule inclut tout espace délimité par des parois sur au moins certains de ses côtés, cet espace pouvant être habitable, comme l'habitacle, ou non habitable, comme le coffre. L'espace intérieur du véhicule peut être entièrement clos par des parois, incluant une paroi de plancher, une paroi de plafond et des parois latérales ou, a contrario, être ouvert sur un ou plusieurs côtés, par exemple sur le coté supérieur dans le cas de l'habitacle d'un véhicule cabriolet. L'invention s'applique aussi aux véhicules dits « monospace » dans lesquels le coffre et l'espace habitable ne sont pas séparés.

On connaît des véhicules du type ci-dessus, qui sont munis d'un dispositif de transmission de signaux appartenant à un système de commande mains libres. Dans ce cas, l'expression « mains libres » signifie qu'il n'est pas nécessaire d'utiliser une clé mécanique pour effectuer certaines opérations. Par exemple, le système de commande mains libres permet de mettre en oeuvre un procédé d'accès mains libres pour commander à distance un organe de condamnation de l'accès au véhicule, par exemple une serrure de portière ou de haillon de coffre, ou encore un procédé de démarrage mains libres pour commander à distance un organe de démarrage du véhicule.

Pour un véhicule muni d'un système de commande mains libres, le dispositif récepteur portatif est un identifiant électronique, qui est un émetteur-récepteur destiné à être porté par un utilisateur autorisé du véhicule et qui remplace la clé mécanique. Une unité centrale de commande embarquée sur le véhicule établit, par l'intermédiaire du dispositif de transmission de signaux, un dialogue bidirectionnel à distance avec le dispositif récepteur portatif pour authentifier l'utilisateur et commander des moyens de condamnation/décondamnation des serrures des ouvrants, respectivement des moyens de mise en marche du moteur, lorsque l'utilisateur a été reconnu authentique. Par exemple, l'initialisation du protocole de communication peut être activée en touchant ou en actionnant la poignée extérieure de porte, ou encore par détection de la présence de la main au voisinage de la poignée extérieure de porte, pour l'accès mains libres ; ou en appuyant sur un bouton de démarrage sur le tableau de bord, pour le démarrage mains libres. En variante, cette initialisation peut être déclenchée en actionnant un bouton de commande du dispositif récepteur portatif. Un dispositif de ce type est décrit dans le brevet US-A-4873530.

Pour la liaison depuis l'unité centrale de commande vers le dispositif récepteur portatif, il est courant d'utiliser un champ magnétique modulé, avec une fréquence de porteuse située par exemple entre 10 kHz et 20 kHz, ou aux environs de 125 kHz, aux environs de 6 MHz ou encore aux environs de 13 MHz, en fonction des bandes autorisées.

Dans un tel véhicule, pour des raisons de sécurité, il est nécessaire de tenir compte de la position du dispositif récepteur portatif lors de différentes étapes du procédé de commande. Par exemple, il est préférable de n'autoriser le démarrage du véhicule que si le dispositif récepteur portatif se trouve à l'intérieur du véhicule et, a contrario, de n'autoriser la condamnation des portières, respectivement du haillon de coffre, que si le dispositif récepteur portatif se trouve à l'extérieur de l'habitacle du véhicule, respectivement de son coffre. Quant à la décondamnation des serrures, celle-ci ne doit être autorisée que lorsque l'utilisateur est assez près du véhicule pour être conscient du déroulement des opérations commandées, afin d'éviter une mise en oeuvre accidentelle ou frauduleuse du procédé de commande.

EP 992 408 A divulgue un véhicule, dans lequel le dispositif de transmission de signaux comprend trois unités de transmission disposées en différents points du véhicule. Dans ce véhicule, on détermine la position du dispositif récepteur portatif en envoyant des signaux de véhicule au dispositif récepteur portatif depuis les unités de transmission, avec une fréquence d'onde porteuse dans la bande des hyperfréquences, en envoyant en écho des signaux de clé à celles-ci depuis le dispositif récepteur portatif, et en mesurant la durée écoulée entre le signal de véhicule et les signaux de clé reçus par les différentes unités de transmission. Pour chaque unité de transmission, un éloignement maximal autorisé du dispositif récepteur portatif est défini en fonction d'un certain seuil de durée autorisée.

Ce véhicule présente un inconvénient, en ce que trois unités de transmission, qui doivent comporter chacune au moins une antenne d'émission alimentée par un générateur de signaux, sont nécessaires pour déterminer la position du dispositif récepteur portatif. Tout cet équipement accroît le coût du véhicule.

Un autre inconvénient tient à la méthode de détermination de la position du dispositif récepteur portatif par rapport à l'espace intérieur du véhicule, c'est-à-dire la question de savoir si le dispositif récepteur portatif est à l'intérieur ou à l'extérieur dudit espace. Cette détermination est réalisée en imposant la condition qu'au moins deux unités de transmission reçoivent le signal de clé du dispositif récepteur portatif pour que ce dernier soit considéré à l'intérieur de l'espace intérieur. Une telle méthode de détermination n'est possible qu'en faisant coïncider cet espace intérieur avec l'intersection des zones d'éloignement maximal autorisé définies pour chacune des unités de transmission, ce qui impose des contraintes sévères sur le placement des unités de transmission et, par conséquent, impose des contraintes quant à la conception du véhicule, étant donné l'encombrement des unités de transmission qu'il faut placer aux emplacements requis.

Encore un autre inconvénient tient à la forme circulaire de la zone d'éloignement maximal autorisé qui est définie pour chaque unité de transmission, laquelle ne permet de couvrir une zone vaste et/ou de géométrie complexe qu'en accroissant le nombre d'unités de transmission ou le nombre d'antennes, ce qui accroît le coût et la complexité de l'équipement du véhicule.

En outre, les micro-ondes présentent l'inconvénient de se réfléchir sur les parois du véhicule, ce qui peut entraîner un brouillage des signaux par réflexion multiple.

On connaît également un véhicule équipé d'un système de commande mains libres utilisant une fréquence de 125kHz pour la liaison depuis l'unité centrale de commande vers le dispositif récepteur portatif. Mais ce véhicule présente par ailleurs les mêmes inconvénients que le précédent. Par exemple, pas moins de cinq antennes extérieures et quatre antennes intérieures sont utilisées pour déterminer si le dispositif récepteur portatif est à l'intérieur ou à l'extérieur du véhicule, car chacune d'elles présente une zone de couverture assez restreinte et dont la géométrie est mal contrôlée. Une antenne magnétique est typiquement constituée de plusieurs spires de câble conducteur, avec éventuellement un noyau de ferrite pour améliorer l'efficacité. Une telle antenne présente une certaine impédance inductive, ce qui impose l'utilisation d'un circuit adapté pour obtenir un transfert d'énergie satisfaisant depuis la source d'énergie, et des moyens d'atténuation pour obtenir une reconnaissance des données satisfaisante. Tout cet équipement accroît le coût du véhicule.

La présente invention vise à fournir un véhicule résolvant au moins certains des inconvénients précités. En particulier, l'invention vise à fournir un véhicule permettant de tenir compte de la position du dispositif récepteur portatif dans des zones de géométrie quelconque, avec un dispositif de transmission de signaux aussi économique et facile à installer que possible.

Pour cela, l'invention fournit un véhicule du type susmentionné, dans lequel le dispositif de transmission de signaux est muni d'une antenne d'émission, caractérisé par le fait que ladite antenne d'émission comprend au moins une boucle conductrice fermée pour engendrer un champ magnétique, ladite boucle conductrice étant configurée de manière à longer au moins une desdites parois le long d'une zone de détection dans laquelle la présence du dispositif récepteur portatif doit être détectée.

Au sens de l'invention, une boucle est un contour fermé quelconque, dont la forme peut être simple, par exemple en anneau polygonal ou ovale, ou plus compliquée, par exemple en anneaux multiples, en forme de huit, ou encore en forme torsadée à ventres multiples.

La zone de détection est située à l'intérieur de l'espace intérieur du véhicule, c'est-à-dire qu'elle comprend au moins une partie, habitable ou non, de l'espace intérieur du véhicule située à l'aplomb de la paroi longée par la boucle conductrice ou entre plusieurs parois longées par la boucle conductrice. Cette boucle conductrice qui longe une ou plusieurs parois permet d'engendrer un champ magnétique dont l'amplitude varie nettement entre la zone de détection et le reste de l'espace, notamment l'extérieur du véhicule, de manière à tenir compte de la position du dispositif récepteur portatif par rapport à ladite zone par une simple détection du niveau de champ reçu par le dispositif récepteur portatif.

De plus, la réalisation de l'antenne d'émission est facile, peu coûteuse et s'adapte facilement à la définition de zones de détection aux contours complexes.

Selon l'invention, la boucle conductrice comprend au moins une paroi conductrice dudit véhicule, notamment au moins l'une parmi une paroi de plancher, une paroi de toit et une paroi latérale de carrosserie dudit véhicule.

Tirant avantage du fait que la carrosserie et le châssis d'un véhicule sont généralement réalisés en métal conducteur, typiquement en acier, cette réalisation propose d'intégrer une ou plusieurs de ces éléments de structure dans la boucle conductrice, ce qui réduit les coûts de réalisation et d'installation de ladite boucle.

Avantageusement, ladite boucle conductrice comprend au moins un câble conducteur longeant au moins une desdites parois.

De préférence dans ce cas, ledit ou chaque câble conducteur est raccordé à ladite paroi conductrice par un connecteur électrique en patte d'oie de manière à diffuser le courant électrique parcourant ledit câble conducteur dans ladite paroi conductrice.

Avantageusement, ledit ou chaque câble conducteur s'étend selon une direction longitudinale ou latérale du véhicule le long d'une des surfaces inférieure et supérieure de ladite paroi de plancher.

Selon une autre réalisation particulière de l'invention, ladite boucle conductrice est configurée de manière à entourer ladite zone de détection. Cette réalisation prend partie du fait que le champ magnétique engendré par la boucle conductrice présente un gradient important lors du franchissement de la boucle transversalement à l'axe d'enroulement de ladite boucle. De ce fait, cette réalisation permet d'obtenir un niveau de champ sensiblement différent entre l'espace intérieur, ou la portion de cet espace intérieur, qui est entouré(e) par la boucle, et le reste de l'espace, notamment l'extérieur du véhicule.

Avantageusement, la boucle conductrice est intégralement formée par des parois conductrices dudit véhicule reliées en forme d'anneau. Cette caractéristique permet de réaliser à moindre frais une boucle conductrice qui entoure complètement l'espace intérieur en suivant ses parois.

De préférence dans ce cas, lesdites parois conductrices comprennent une paroi de plafond, une paroi de plancher et deux piliers sensiblement verticaux reliant lesdites parois de plafond et de plancher.

Avantageusement, le véhicule selon l'invention comporte plusieurs boucles conductrices entourant plusieurs zones distinctes dudit espace intérieur. Par exemple, une boucle entoure la totalité ou une partie de l'espace habitable du véhicule et une boucle entoure un espace de rangement comme le coffre du véhicule ou une autre partie de l'espace habitable. Par exemple, les différentes boucles conductrices peuvent être alimentées par l'intermédiaire d'une seule source de tension et de plusieurs relais distincts permettant de connecter sélectivement chacune des boucles conductrices à ladite source en fonction de la géométrie du champ à engendrer.

Selon un mode de réalisation particulier de l'invention, l'antenne d'émission est alimentée par l'intermédiaire d'un transformateur comportant un circuit magnétique à faible réluctance traversant respectivement un enroulement primaire et un enroulement secondaire alimentant ladite boucle conductrice.

Avantageusement, l'enroulement secondaire est formé par lesdites parois conductrices reliées en forme d'anneau, ledit circuit magnétique étant disposé contre au moins une desdites parois conductrices.

Avantageusement, le rapport du nombre de spires dudit enroulement primaire sur le nombre de spires dudit enroulement secondaire est compris entre 5 et 200, de préférence entre 10 et 100. Un tel transformateur est en particulier bien adapté à l'obtention d'une alimentation de l'antenne avec une forte intensité, par exemple une ou quelques ampères, à partir des sources d'électricité habituelles du véhicule, comme une batterie de 12V délivrant par exemple une ou quelques centaines de milliampères.

Selon un autre mode de réalisation particulier de l'invention, la boucle conductrice est reliée à au moins un amplificateur de puissance. De préférence, la boucle conductrice comporte deux bornes reliées respectivement à deux amplificateurs de puissance fonctionnant en opposition de phase.

De préférence, le générateur des signaux est apte à engendrer un signal oscillant à une fréquence de l'ordre de 125 kHz.

Selon une autre réalisation particulière de l'invention, le dispositif de transmission de signaux est apte à émettre au moyen de ladite antenne d'émission plusieurs signaux successifs ayant des niveaux de puissance croissants, de manière à couvrir successivement des zones de détection ayant des tailles croissantes pour détecter la présence du dispositif récepteur portatif.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence au dessin annexé. Sur ce dessin :
- la figure 1 est une vue de dessus écorchée d'un véhicule selon un premier mode de réalisation n'appartenant pas à l'invention, mais utile à sa compréhension,
- la figure 2 est une vue de dessus écorchée d'un véhicule selon un deuxième mode de réalisation conforme à l'invention,
- la figure 3 est une représentation schématique d'un circuit d'alimentation de l'antenne d'émission des véhicules selon l'invention,
- la figure 4 est une vue en coupe selon la ligne IV-IV de la figure 5 d'un véhicule selon un troisième mode de réalisation conforme à l'invention,
- la figure 5 est une vue latérale du véhicule de la figure 4,
- la figure 6 est une vue partielle du véhicule de la figure 4 en coupe selon la ligne VI-VI,
- la figure 7 représente les lignes du champ magnétique engendré par une spire simple parcourue par un courant électrique,
- la figure 8 représente de manière schématique la distribution de champ magnétique obtenue à l'aide de l'antenne du véhicule selon les différents modes de réalisation de l'invention,
- la figure 9 est une représentation schématique d'un autre circuit d'alimentation de l'antenne d'émission des véhicules selon l'invention,
- la figure 10 est une représentation schématique d'encore un autre circuit d'alimentation de l'antenne d'émission des véhicules selon l'invention.

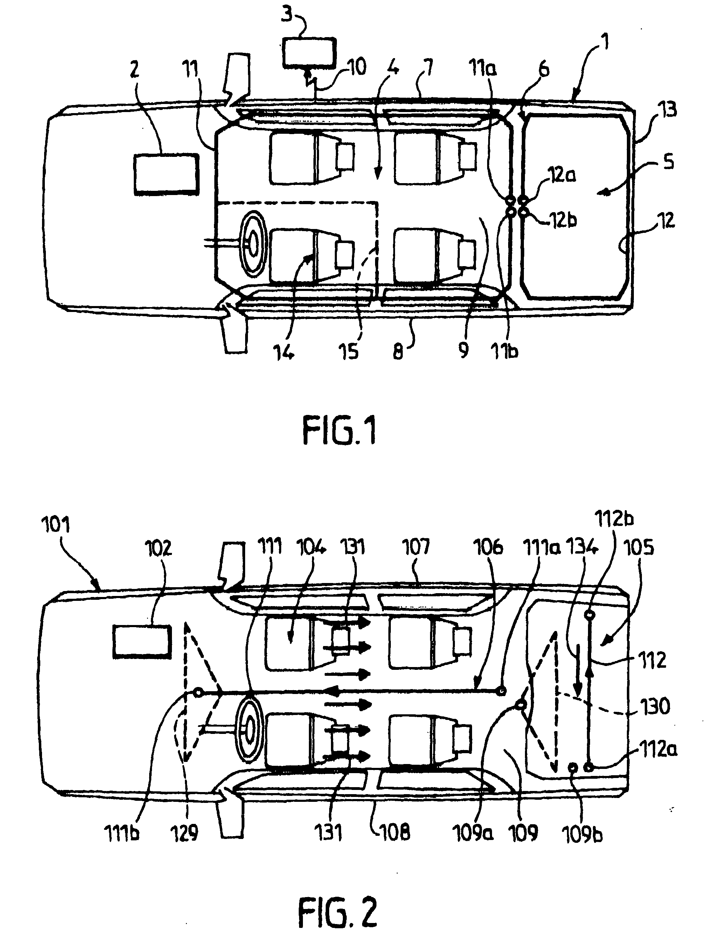

En référence à la figure 1, dans le premier mode de réalisation, le véhicule automobile 1 est représenté en vue de dessus, la paroi de toit étant omise pour laisser voir l'espace intérieur habitable 4. Cet espace intérieur habitable 4 est délimité par des parois latérales de carrosserie 7 et 8, dans lesquelles sont montées les portières avant et arrière, un tablier avant (non représenté) qui le sépare du moteur, une paroi arrière (non représentée) qui le sépare de l'espace intérieur du coffre 5, et une paroi de plancher 9.

Le véhicule 1 est équipé d'un système de commande mains libres comportant une unité centrale 2 embarquée dans le véhicule et un identifiant électronique 3 destiné à être porté par un utilisateur autorisé du véhicule pour mettre en oeuvre un procédé d'accès ou de démarrage main libre, selon la technique connue. Pour la liaison depuis l'unité centrale 2 vers l'identifiant 3, l'unité centrale 2 comporte un générateur de signaux électrique qui est relié, d'une manière qui sera précisée plus bas, à une antenne d'émission 6.

L'antenne d'émission 6 comporte deux câbles conducteurs 11 et 12, munis de gaines isolantes, disposés respectivement en forme d'anneaux simples autour de l'espace habitable 4 et de l'espace du coffre 5. Les câbles 11 et 12 sont disposés au niveau de la paroi de plancher 9 en utilisant, là où ils préexistent, les passage des torons d'alimentation des différents organes du véhicule 1, comme les feux arrière par exemple. Ces passages préexistant sont complétés, le cas échéant, pour permettre d'agencer les câbles 11 et 12 d'une manière entièrement invisible pour les occupants du véhicule, ce qui est préférable du point de vue de l'ergonomie et de l'aspect.

Le câble 11 comporte deux bornes 11a et 11b situées au milieu du côté transversal arrière de l'espace habitable 4. Entre celles-ci, le câble 11 longe la base des parois verticales délimitant l'espace habitable 4, à savoir la paroi latérale 7, le tablier avant, la paroi latérale 8 et la paroi de séparation avec le coffre 5. En variante, le câble 11 peut être disposé ailleurs que sur la paroi de plancher 9, par exemple au niveau de la paroi de toit du véhicule, tout en suivant le même contour. De manière similaire, le câble 12 comporte deux bornes 12a et 12b situées sensiblement au même endroit que les bornes 11a et 11b. Entre celles-ci, le câble 12 longe la base des parois verticales délimitant l'espace intérieur du coffre 5, à savoir la paroi de séparation avec l'espace habitable 4, une partie arrière des parois latérales 7 et 8 et la paroi arrière 13 de la carrosserie.

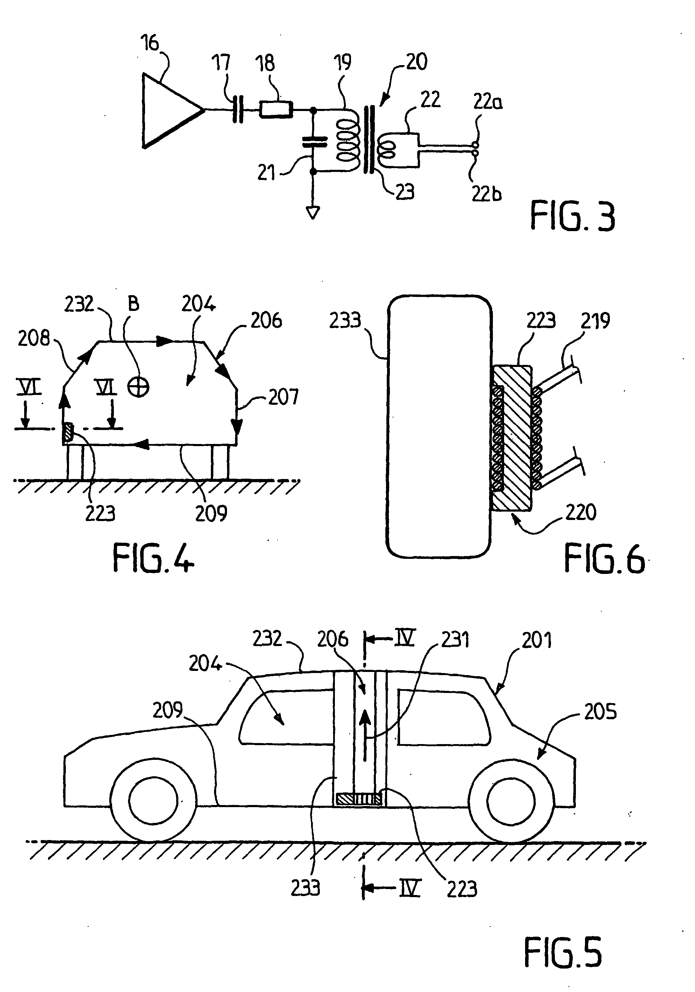

La figure 3 représente schématiquement le circuit d'alimentation de l'antenne 6. Ce circuit est intégré à l'unité centrale 2 et alimenté en énergie par la batterie du véhicule (non représentée). Il comporte un amplificateur 16 dont la sortie est relié à un condensateur 17 monté en série avec une résistance 18. Entre la résistance 18 et la masse sont montés en parallèle un enroulement 19 qui forme le circuit primaire d'un transformateur de courant 20 et un deuxième condensateur 21. Un circuit générateur de signal électrique (non représenté) est également intégré à l'unité centrale 2 et relié à l'entrée de l'amplificateur 16 pour produire le signal de données devant être émis.

Le transformateur de courant 20 comporte, en tant que circuit secondaire, un deuxième enroulement 22 dont les bornes 22a et 22b sont reliées respectivement aux bornes 11a et 11b du câble 11. Un noyau de ferrite 23 forme un circuit magnétique fermé de faible réluctance qui traverse les enroulements 19 et 22. L'enroulement 19 comporte un nombre N1 de spires et l'enroulement 22 comporte un nombre N2 de spires. Selon la technique connue, les nombres N1 et N2 sont choisis en fonction du rapport de tension ou d'intensité souhaité entre le circuit primaire et le circuit secondaire. Par exemple, l'intensité délivrée par l'amplificateur 16 est de l'ordre de 50 à 500 mA pour 5 à 12 V de tension crête et le rapport N1/N2 est choisi de l'ordre de 10 à 100, pour obtenir une intensité de l'ordre de 5 A dans le câble 11 lors de l'émission d'un signal vers l'identifiant 3. On peut choisir avantageusement N2=1. Le transformateur 20 est réalisé sous la forme d'un circuit imprimé.

L'alimentation du câble 12 est réalisé de manière similaire, soit en reliant également les bornes 12a et 12b aux bornes 22a et 22b respectivement, moyennant quoi les câbles 11 et 12 seront alimentés ensemble, soit en prévoyant un deuxième transformateur identique pour alimenter le câble 12 de manière indépendante du câble 11. Les câbles 11 et 12 peuvent aussi être reliés au transformateur 20 par deux relais (non représentés) permettant de connecter et de déconnecter indépendamment chacune d'elles selon la géométrie de champ émis souhaitée. Pour conduire le niveau d'intensité de l'ordre de 5 A, les câbles 11 et 12 peuvent être choisis de petit diamètre, par exemple entre 0,6 et 1 mm.

Les caractéristiques des condensateurs 17 et 21 et des enroulements 19 et 22 sont choisies de manière à régler la fréquence de résonance de l'antenne 6 reliée à son circuit d'alimentation en fonction de la valeur souhaitée, par exemple sensiblement 125kHz ou une autre fréquence autorisée. De plus, le coefficient de surtension de l'antenne 6 reliée à son circuit d'alimentation ne doit pas être trop élevé, par exemple inférieur ou égal à 10, pour permettre une bonne transmission des données. Ce coefficient de surtension peut être réglé par le choix de la valeur de la résistance 18. Cependant, la résistance 18 peut également être supprimée si la résistance intrinsèque de l'antenne 6 est suffisante.

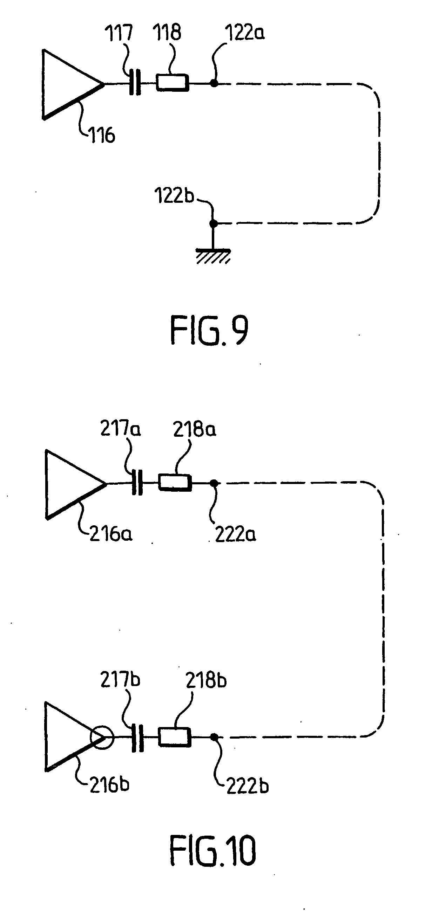

La figure 9 représente schématiquement une variante de circuit d'alimentation pour l'antenne 6. Ce circuit comporte un amplificateur de puissance 116 à la sortie duquel sont branchés en série une capacité 117, une résistance 118 et une borne 122a pouvant être reliée à la borne 11a du câble 11 pour l'alimenter. Ce circuit comporte aussi une borne de masse 122b pouvant être reliée à la borne 11b du câble 11.

La figure 10 représente schématiquement une autre variante de circuit d'alimentation pour l'antenne 6. Ce circuit comporte deux amplificateurs de puissance 116a et 116b fonctionnant en opposition de phase pour alimenter le câble 11 de manière symétrique. A la sortie de l'amplificateur 116a sont branchés en série une capacité 217a, une résistance 218a et une borne 222a pouvant être reliée à la borne 11a du câble 11. A la sortie de l'amplificateur 116b sont branchés en série une capacité 217b, une résistance 218b et une borne 222b pouvant être reliée à la borne 11b du câble 11. Ce montage symétrique présente l'avantage d'annuler le champ électrique parasite.

Les câbles 11 et 12 forment chacun une boucle conductrice pouvant être alimentée par l'un des circuits décrits ci-dessus, lesquels ne sont pas représentés sur la figure 1, pour engendrer un champ magnétique devant être reçu par l'identifiant 3.

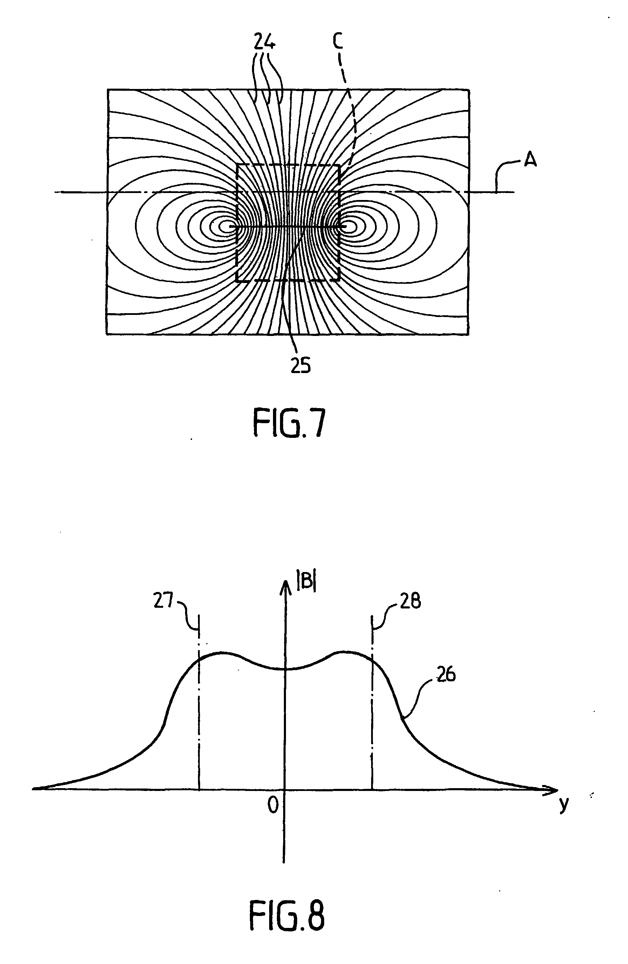

La figure 7 représente l'allure typique des lignes de champ magnétique 24 engendrées par une spire conductrice simple 25 parcourue par un courant électrique uniforme. La figure 7 correspond plus précisément au cas d'une spire 25 circulaire, de sorte que cette figure doit être comprise comme présentant une symétrie de révolution autour d'un axe vertical passant par le milieu de la spire 25. Bien que la boucle conductrice constituée par le câble 11 ou 12 ne soit pas exactement circulaire dans le mode de réalisation représenté à la figure 1, la figure 7 fournit une première approximation de la distribution du champ magnétique engendrée par une telle boucle conductrice. En particulier, comme l'indique la densité des lignes de champ, une telle boucle conductrice engendre un champ magnétique dont l'intensité est maximale à l'intérieur d'une zone globalement cylindrique C, délimitée en trait interrompu à la figure 7, dont l'axe est perpendiculaire au plan contenant la boucle et dont la courbe génératrice correspond sensiblement au contour de la boucle. Dans cette zone C, le champ magnétique est orienté sensiblement perpendiculairement au plan contenant la boucle.

Ainsi, si l'on considère le champ magnétique **B** émis par l'anneau du câble 11, et que l'on suit une ligne traversant l'espace 4 selon la direction transversale du véhicule, on observe une distribution de champ analogue, en première approximation, à la distribution de champ observée le long de la ligne A de la figure 7. Cette approximation est limitée par le fait qu'elle ne tient pas compte de l'environnement de l'antenne 6. Dans le véhicule 1, les partie métalliques du véhicule 1 influent sur la distribution des lignes de champ en confinant celles-ci davantage à l'intérieur de l'espace 4.

Au sens de l'invention, on considère que la boucle conductrice entoure une zone de détection lorsque ladite zone de détection est essentiellement incluse dans la zone C correspondant à ladite boucle conductrice. Lorsque la boucle conductrice en question est située au voisinage d'une paroi conductrice du véhicule, par exemple une paroi de plancher ou de plafond, la zone C correspondant à ladite boucle s'étend majoritairement du côté intérieur du véhicule par rapport à ladite paroi, car celle-ci fait un écran qui atténue le champ magnétique du côté extérieur du véhicule.

La distribution de champ obtenue à travers le véhicule 1 est représentée schématiquement par la courbe 26 sur la figure 8. Sur la figure 8, l'abscisse y représente le déplacement selon la direction transversale du véhicule 1, l'origine étant au milieu du véhicule. En ordonnée, on a représenté l'amplitude |**B**| du champ magnétique émis, à un instant donné. Les lignes en trait mixte 27 et 28 représentent respectivement l'emplacement des parois latérales 7 et 8. On constate que le champ magnétique présente une amplitude maximale et sensiblement uniforme dans l'espace 4, entre les parois latérales 7 et 8 et présente une décroissance raide à l'extérieur des parois latérales 7 et 8. La distribution de champ engendrée par le câble 12 est similaire. En outre, on obtiendrait un représentation similaire en représentant l'amplitude |**B**| du champ magnétique émis selon une ligne longitudinale du véhicule 1. Cette distribution du champ magnétique émis permet d'effectuer une discrimination entre l'intérieur et l'extérieur de chaque boucle conductrice en fonction de la seule amplitude |**B**| du champ émis.

L'amplitude du creux formé par la courbe 26 dans le milieu du véhicule croît avec la largeur, respectivement avec la longueur de la boucle 11. Si l'amplitude de ce creux est trop importante et empêche d'effectuer une discrimination satisfaisante entre l'intérieur et l'extérieur de la boucle 11 en fonction de l'amplitude |**B**| du champ émis, on peut utiliser une boucle 11 en forme de huit afin d'affiner le maillage de l'espace intérieur 4 du véhicule.

Le système de commande mains libres fonctionne de la manière suivante. Pour demander l'exécution d'une commande, par exemple demander l'accès au véhicule lorsque celui-ci est condamné ou demander le démarrage du véhicule, l'utilisateur portant l'identifiant 3 effectue une action d'initialisation, par exemple il actionne la poignée d'une portière avant, ce qui envoie un signal d'éveil à l'unité centrale 2, laquelle réagit à ce signal en émettant un premier signal radiofréquence depuis l'antenne 6, comme indiqué par la flèche 10 à la figure 1, par exemple par modulation d'amplitude d'une onde porteuse à 125kHz.

En fonction de sa position par rapport au véhicule, l'identifiant 3 reçoit un signal de plus ou moins forte amplitude. Lorsque l'identifiant 3 est à l'intérieur de l'espace habitable 4, il reçoit un signal d'amplitude maximale, qui est par exemple supérieure à 5 mV au niveau de l'antenne de réception de l'identifiant 3. Lorsque l'identifiant 3 est à l'extérieur de l'espace habitable 4, il reçoit un signal d'amplitude plus faible, qui est par exemple inférieure à 2 mV à 0,2 m de distance du véhicule 1. En outre, plus l'identifiant 3 est éloigné du véhicule, plus l'amplitude du signal reçu est faible.

Par la suite, on détermine si l'identifiant 3 se trouve à une position où l'exécution de la commande demandée est autorisée en détectant l'amplitude du signal reçu par l'identifiant 3 et en comparant cette amplitude à un seuil d'autorisation prédéterminé. Par exemple, ce seuil est fixé entre 2 et 5 mV au niveau de l'antenne de l'identifiant 3. Par exemple, l'identifiant 3 peut être muni d'un circuit logique permettant de mesurer l'amplitude du champ reçu. Lorsque cette mesure indique une amplitude supérieure au seuil d'autorisation, l'identifiant 3 décide de poursuivre le procédé de commande en envoyant un signal de réponse à l'unité centrale 2, selon la technique connue. Inversement, lorsque la mesure indique une amplitude inférieure au seuil d'autorisation, l'identifiant 3 décide d'interdire l'exécution de la commande et n'envoie aucun signal de réponse à l'unité centrale 2, ce qui met fin à l'exécution de la commande jusqu'à ce qu'un nouveau signal d'éveil soit produit par une action d'initialisation de l'utilisateur.

Selon une autre possibilité, l'identifiant 3 répond à l'unité centrale 2 à l'aide d'un signal contenant la valeur d'amplitude mesurée par l'identifiant 3. Dans ce cas, c'est l'unité centrale 2 qui décide de poursuivre ou non l'exécution de la commande en fonction de cette valeur d'amplitude.

Dans les deux cas ci-dessus, la mesure de l'amplitude du champ reçu indique explicitement la localisation de l'identifiant 3. Selon encore une autre possibilité, l'identifiant 3 n'est pas muni de moyens de mesure d'amplitude du champ reçu mais présente simplement un seuil de réception fixe, réglé de manière analogique, par exemple entre 2 et 5 mV. Dans ce cas, lorsque l'amplitude du champ au niveau de l'antenne de l'identifiant 3 est inférieure à ce seuil de réception, l'identifiant 3 ne reçoit pas le premier signal 10 et le procédé s'interrompt de fait. Inversement, lorsque l'amplitude du champ au niveau de l'antenne de l'identifiant 3 est supérieure ou égale à ce seuil, l'identifiant 3 reçoit le premier signal 10 et répond à l'unité centrale avec un signal d'authentification afin de poursuivre l'exécution de la commande, selon la technique connue. On obtient alors une indication implicite de la localisation de l'identifiant 3.

Dans ce dernier cas, l'unité centrale 2 est conçue de préférence de manière à pouvoir émettre le premier signal 10 à plusieurs reprises en réponse à l'action d'initialisation, avec un niveau de puissance qui croît à chaque itération jusqu'à ce que l'identifiant 3 reçoive le premier signal 10 ou qu'un niveau maximal de puissance soit atteint. Ainsi, l'unité centrale 2 commence par émettre une première fois le premier signal 10, avec un niveau de puissance minimal. Ce niveau minimal est réglé, en fonction du seuil de réception de l'identifiant 3, de manière que l'identifiant 3 ne puisse recevoir cette première occurrence du premier signal 10 qu'en se trouvant dans une zone de détection de petite taille, par exemple à moins de 20 cm à l'extérieur du véhicule.

Soit l'identifiant 3 reçoit le premier signal 10 et répond à l'unité centrale 2 avec un signal d'authentification afin de poursuivre l'exécution de la commande ; soit il ne le reçoit pas. Après un laps de temps suffisant pour permettre à l'identifiant 3 de répondre, l'unité centrale 2, lorsqu'elle n'a pas reçu le signal d'authentification, émet à nouveau le premier signal 10, avec un niveau de puissance accru, de manière que l'identifiant 3 puisse recevoir cette deuxième occurrence du premier signal en se trouvant dans une zone de détection de taille plus grande que la première fois, par exemple à moins de 50 cm du véhicule. Le procédé peut se répéter ainsi plusieurs fois, par exemple avec trois niveaux de puissance d'émission distincts ou plus. Selon l'occurrence du premier signal 10 à laquelle l'identifiant 3 répond, l'unité centrale peut déterminer dans quelle zone l'identifiant se trouve et décider de poursuivre ou non l'exécution de la commande. De préférence, la puissance d'émission maximale est déterminée de manière à couvrir exactement une zone de détection correspondant à la limite de sécurité au delà de laquelle aucune exécution de commande n'est autorisée.

On notera que le procédé d'émission susmentionné n'est limité ni à un type d'antenne particulier, ni à un type de récepteur particulier. Il est applicable à tout dispositif de transmission de signaux embarqué dans un véhicule, quelle que soit la conception des antennes d'émission.

La configuration des câbles 11 et 12 formant l'antenne 6 permet ainsi, moyennant un très faible coût d'équipement et d'installation, de tenir compte de la position de l'identifiant 3 par rapport au véhicule 1, notamment par rapport à l'espace habitable 4 et par rapport à l'espace du coffre 5, lorsque l'exécution d'une commande est demandée, afin d'autoriser ou d'interdire cette exécution. Par exemple, la position de l'identifiant 3 par rapport à l'espace habitable 4 et la position de l'identifiant 3 par rapport à l'espace du coffre 5 peuvent être évaluées de manière successive en alimentant successivement le câble 11 et le câble 12 dans le cadre du procédé décrit ci-dessus.

Grâce à la décroissance nette de l'amplitude du champ émis au niveau des parois du véhicule 1, la localisation de l'identifiant 3 par rapport aux zones de détection entourées par l'antenne 6 peut être obtenue, explicitement ou implicitement, avec une résolution spatiale d'environ 0,5 m.

D'autres configurations des câbles et un nombre plus important ou plus faible de câbles sont possibles. Dans une variante de réalisation, le câble 11 présente un contour modifié pour éviter d'entourer l'emplacement du siège du conducteur 14, comme représenté par le contour 15 en traits interrompus. Un troisième câble, non représenté, est alors disposé uniquement autour du siège 14 afin de tenir compte de la position de l'identifiant 3 vis à vis de cette zone de manière spécifique, par exemple pour l'autorisation d'une commande de démarrage.

En référence à la figure 2, on décrit maintenant un deuxième mode de réalisation conforme à l'invention. Les éléments analogues ou identiques au premier mode de réalisation ne sont pas décrits à nouveau et portent le même chiffre de référence augmenté de 100.

Dans le mode de réalisation de la figure 2, l'antenne 106 est faite différemment de l'antenne 6 de la figure 1. L'antenne 106 comporte un câble conducteur 111 qui s'étend le long de la surface supérieure ou inférieure de la paroi de plancher 109 du véhicule 101, selon une ligne médiane longitudinale du véhicule 101, et la paroi 109 elle-même. Le câble 111 présente une borne 111a située au niveau de la paroi de séparation entre l'espace habitable 104 et le coffre 105, et une borne 111b située au niveau du tablier avant séparant l'espace 104 du moteur. La borne 111b est reliée électriquement à la paroi de plancher 109 du véhicule, qui est réalisée en métal conducteur, typiquement en acier. La paroi de plancher 109 porte une deuxième borne 109a au voisinage de la borne 111a du câble 111. La paroi de plancher 109 et le câble 111 forment ainsi une boucle conductrice qui est alimentée par l'unité centrale 102 pour émettre un champ magnétique, de manière similaire à l'antenne 6 de la figure 1. L'alimentation de l'antenne 106 peut réalisée en reliant la borne 111a et la borne 109a aux bornes du circuit de la figure 3 ou 9 ou 10. A chaque instant, l'intensité induite dans l'enroulement secondaire 22 circule dans un sens à travers le câble 111, par exemple vers l'avant dans l'exemple représenté à la figure 2, et circule dans le sens opposé à travers la paroi de plancher 109, avec une répartition sensiblement uniforme, comme indiqué par les flèches 131.

Pour favoriser la diffusion du courant conduit par le câble 111 dans la direction transversale de la paroi 109, et donc améliorer l'uniformité du courant dans la paroi 109, on peut prévoir de relier la borne 111b au tablier avant au-dessus de la paroi 109, par exemple derrière le tableau de bord du véhicule 101. Une autre possibilité est d'interposer un connecteur électrique en patte d'oie 129 entre la borne 111b et la paroi 109. Un connecteur similaire 130 peut aussi être interposé entre la paroi 109 et la borne 109a. Les connecteurs en patte d'oie 129 et 130 peuvent être réalisés dans des plaques en métal bon conducteur, comme le cuivre, ou être formés par des faisceaux de fils en métal bon conducteur, par exemple avec trois fils ou plus.

La distribution de champ magnétique obtenue à l'aide de l'antenne d'émission 106 présente des avantages similaires à ceux du premier mode de réalisation. L'amplitude du champ émis en maximale à l'aplomb de la paroi de plancher 109, c'est-à-dire à l'intérieur de l'espace habitable 104, à cause de la plus grande proximité de cet espace par rapport à l'antenne 106, et à l'effet de confinement du champ procuré par les parois 107, 108 et autres. Ainsi, comme dans le mode de réalisation précédent, le champ émis présente une différence de niveau mesurable par l'identifiant, de manière explicite ou implicite, entre l'intérieur de l'espace habitable 104 et l'extérieur de l'espace habitable 104, ce qui permet de tenir compte de sa position vis à vis de l'espace habitable 104 lors de la mise en oeuvre du procédé de commande mains libres.

Ce mode de réalisation se caractérise par la réalisation d'une boucle conductrice constituée partiellement de câble conducteur et partiellement d'une ou plusieurs paroi conductrice du véhicule. De nombreuses variantes sont possibles dans ce cadre. Par exemple, au lieu du câble 111 s'étendant au milieu du véhicule, on peut prévoir deux câbles parallèles à celui-ci et s'étendant sur la paroi de plancher 109 de manière à longer l'habitacle sur ses deux bords. Un câble peut aussi être agencé latéralement, comme le câble 112 sur la figure 2. Le câble 112 présente une borne de connexion 112a située dans le coffre 105 à proximité d'une borne de connexion 109b de la paroi de plancher 109, et une borne 112b reliée électriquement à la paroi de plancher 109 du véhicule. La flèche 134 représente le retour du courant dans la paroi de plancher lorsque les bornes de connexion 109b et 112a sont alimentées.

En référence aux figures 4 à 6, on décrit maintenant un troisième mode de réalisation conforme à l'invention. Les éléments analogues ou identiques au premier mode de réalisation ne sont pas décrits à nouveau et portent le même chiffre de référence augmenté de 200.

Dans le mode de réalisation des figures 4 à 6, l'antenne 206 est faite différemment de l'antenne 6 de la figure 1. L'antenne 206 est formée directement par la structure métallique du véhicule 201, comme visible sur la figure 4. L'unité centrale, non représentée, alimente l'antenne 206 au moyen d'un circuit similaire au circuit de la figure 3, hormis en ce qui concerne le transformateur. Alors que le transformateur 20 était réalisé sous la forme d'un circuit imprimé, le transformateur 220, visible à la figure 6, est réalisé contre la carcasse du véhicule 201. Le transformateur 220 comporte un noyau magnétique 223 qui est un barreau de ferrite à section rectangulaire fixé contre un pilier latéral 233 du véhicule 201, c'est-à-dire contre la surface intérieure de la paroi latérale 208 entre la portière avant et la portière arrière. Ainsi, le circuit magnétique du transformateur 220 est formé par le noyau 233 et par le pilier 233 dans ce mode de réalisation. L'enroulement 219 entoure une partie centrale du noyau magnétique 223. La carcasse du véhicule 201, incluant le pilier latéral 233, la paroi de toit 232, le pilier de la paroi latérale opposée 207, et la paroi de plancher 209, forme un anneau conducteur qui entoure complètement le noyau magnétique 223. De ce fait, la structure du véhicule remplit elle-même la fonction d'enroulement secondaire du transformateur 220.

L'enroulement 219 peut être alimenté par le circuit de la figure 3, auquel cas il se substitue à l'enroulement 19 de la figure 3, ou encore par le circuit de la figure 9 ou 10.

Lorsqu'un courant circule dans l'enroulement primaire 219, un courant est induit dans le pilier 233, comme indiqué par la flèche 231, et circule dans l'antenne 206 formée par les parois conductrices du véhicule 201 en forme d'anneau, ce qui engendre un champ magnétique B orienté selon la direction longitudinale du véhicule 201, comme représenté à la figure 4.

La distribution de champ magnétique obtenue à l'aide de l'antenne d'émission 206 présente des avantages similaires à ceux du premier mode de réalisation. Le coût de réalisation de l'antenne 206 est faible puisque l'antenne est en fait constituée d'éléments structurels préexistant du véhicule auxquels on confère une deuxième fonction.

L'antenne 206 pourrait être réalisée à d'autres emplacements sur le véhicule 201, par exemple autour du pare-brise ou autour de la lunette arrière, la seule contrainte étant de disposer d'éléments conducteurs agencés en anneau au niveau des parois du véhicule 201. Un tel anneau pourrait également s'étendre dans la direction longitudinale du véhicule, sensiblement dans un plan vertical, pour engendrer un champ magnétique globalement transversal au véhicule, comme dans le deuxième mode de réalisation.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Véhicule (101 ; 201) comportant un espace intérieur (104 ; 204) délimité par des parois (107, 108, 109 ; 207, 208, 209, 232) et un dispositif de transmission de signaux embarqué (102) destiné à communiquer avec un dispositif récepteur portatif (3) pour mettre en oeuvre un procédé de commande à distance, ledit dispositif de transmission de signaux étant muni d'une antenne d'émission (106 ; 206), ladite antenne d'émission comprenant au moins une boucle conductrice fermée (106 ; 206) pour engendrer un champ magnétique (B), ladite boucle conductrice étant configurée de manière à longer au moins une desdites parois le long d'une zone de détection dans laquelle la présence du dispositif récepteur portatif doit être détectée, **caractérisé par le fait que** ladite boucle conductrice comprend au moins une paroi conductrice (109 ; 207, 208, 209, 232) dudit véhicule.

2. Véhicule selon la revendication 1, **caractérisé par le fait que** ladite au moins une paroi conductrice comprend au moins l'une parmi une paroi de plancher (109 ; 209), une paroi de toit (232) et une paroi latérale de carrosserie (207, 208) dudit véhicule.

3. Véhicule selon l'une des revendications 1 à 2, **caractérisé par le fait que** ladite boucle conductrice comprend au moins un câble conducteur (111) longeant au moins une desdites parois.

4. Véhicule selon la revendication 3, **caractérisé par le fait que** ledit ou chaque câble conducteur (111) est raccordé à ladite paroi conductrice (109) par un connecteur électrique en patte d'oie (129) de manière à diffuser le courant électrique parcourant ledit câble conducteur dans ladite paroi conductrice.

5. Véhicule selon la revendication 3 ou 4, **caractérisé par le fait que** ledit ou chaque câble conducteur (111, 112) s'étend selon une direction longitudinale ou latérale du véhicule (101) le long d'une des surfaces inférieure et supérieure de ladite paroi de plancher.

6. Véhicule selon l'une des revendications 1 à 5, **caractérisé par le fait que** ladite boucle conductrice (206) est configurée de manière à entourer ladite zone de détection (204).

7. Véhicule selon l'une des revendications 1 à 6, **caractérisé par le fait que** ladite boucle conductrice (206) est intégralement formée par des parois conductrices (207, 208, 209, 232) dudit véhicule (201) reliées en forme d'anneau.

8. Véhicule selon la revendication 7, **caractérisé par le fait que** lesdites parois conductrices comprennent une paroi de plafond (232), une paroi de plancher (209), et deux piliers latéraux (233) reliant lesdites parois de plafond et de plancher.

9. Véhicule selon la revendication 7 ou 8, **caractérisé par le fait qu'**il comporte plusieurs boucles conductrices entourant plusieurs zones distinctes dudit espace intérieur.

10. Véhicule selon l'une des revendications 1 à 9, **caractérisé par le fait que** ladite antenne d'émission (106 ; 206) est alimentée par l'intermédiaire d'un transformateur (20 ; 220) comportant un circuit magnétique (23 ; 223, 233) à faible réluctance traversant respectivement un enroulement primaire (19, 219) et un enroulement secondaire (22 ; 206) alimentant ladite boucle conductrice.

11. Véhicule selon la revendication 10 prise en combinaison avec la revendication 8, **caractérisé par le fait que** ledit enroulement secondaire (206) est formé par lesdites parois conductrices (207, 208, 209, 232) reliées en forme d'anneau, ledit circuit magnétique (223) étant disposé contre au moins une (208) desdites parois conductrices.

## Patentansprüche

1. Fahrzeug (101; 201) mit einem Innenraum (104; 204), der durch Wände (107, 108, 109; 207, 208, 209, 232) begrenzt ist, und einer eingebauten Signalübertragungsvorrichtung (102), die der Kommunikation mit einer tragbaren Empfangsvorrichtung (3) dient, um ein Fernsteuerungsverfahren durchzuführen, wobei die Signalübertragungsvorrichtung eine Sendeantenne (106; 206) aufweist, wobei die Sendeantenne wenigstens eine geschlossene Leiterschleife (106; 206) zur Erzeugung eines Magnetfeldes (B) aufweist, wobei die Leiterschleife so ausgebildet ist, dass sie entlang eines Detektionsbereiches, in welchem die Anwesenheit der tragbaren Empfangsvorrichtung detektiert werden soll, an wenigstens einer der Wände entlang verläuft, **dadurch gekennzeichnet, dass** die Leiterschleife wenigstens eine leitfähige Wand (109; 207, 208, 209, 232) des Fahrzeugs umfasst.

2. Fahrzeug gemäß Anspruch 1, **dadurch gekennzeichnet, dass** die wenigstens eine leitfähige Wand wenigstens eine der folgenden Wände umfasst: eine Bodenwand (109; 209), eine Deckenwand (232) oder eine Seitenwand (207, 208) der Karosserie des Fahrzeug.

3. Fahrzeug gemäß einem der Ansprüche 1 oder 2, **dadurch gekennzeichnet, dass** die Leiterschleife wenigstens ein Leiterkabel (111) umfasst, das an wenigstens einer der Wände entlang läuft.

4. Fahrzeug gemäß Anspruch 3, **dadurch gekennzeichnet, dass** das oder jedes Leiterkabel (111) durch einen als Dreiecksverband (129) ausgebildeten elektrischen Verbinder an der leitfähigen Wand (109) so befestigt ist, dass der durch das Leiterkabel fließende elektrische Strom in der leitfähigen Wand verteilt wird.

5. Fahrzeug gemäß einem der Ansprüche 3 oder 4, **dadurch gekennzeichnet, dass** das oder jedes Leiterkabel (111, 112) in einer Längs- oder Querrichtung des Fahrzeugs (101) entlang einer der Unter- oder Oberseiten der Bodenwand verlaufen.

6. Fahrzeug gemäß einem der Ansprüche 1 bis 5, **dadurch gekennzeichnet, dass** die Leiterschleife (206) so angeordnet ist, dass sie den Detektionsbereich (204) umgibt.

7. Fahrzeug gemäß einem der Ansprüche 1 bis 6, **dadurch gekennzeichnet, dass** die Leiterschleife (206) integral durch leitfähige Wände (207, 208, 209, 232) des Fahrzeugs (201) gebildet werden, die in Form eines Rings miteinander verbunden sind.

8. Fahrzeug gemäß Anspruch 7, **dadurch gekennzeichnet, dass** die leitfähigen Wände eine Deckenwand (232), eine Bodenwand (209) und zwei Seitensäulen (233), welche die Decken- und die Bodenwand miteinander verbinden, umfassen.

9. Fahrzeug gemäß einem der Ansprüche 7 oder 8, **dadurch gekennzeichnet, dass** es mehrere Leiterschleifen aufweist, die mehrere verschiedene Bereiche des Innenraums umgeben.

10. Fahrzeug gemäß einem der Ansprüche 1 bis 9, **dadurch gekennzeichnet, dass** die Sendeantenne (106; 206) von einem Transformator (20; 220) versorgt wird, der einen Magnetkreislauf (23; 223, 233) mit geringer Reluktanz aufweist, welcher zur Versorgung der Leiterschleife eine Primärwicklung (19, 219) und eine Sekundärwicklung (22; 206) durchquert.

11. Fahrzeug gemäß Anspruch 10 in Kombination mit Anspruch 8, **dadurch gekennzeichnet, dass** die Sekundärwicklung (206) durch die in Form eines Rings miteinander verbundenen leitfähigen Wände (207, 208, 209, 232) gebildet wird, wobei der Magnetkreislauf (223) gegen wenigstens eine (208) der leitfähigen Wände angeordnet ist.

## Claims

1. Vehicle (101; 201) comprising an interior space (104; 204) delimited by walls (107, 108, 109; 207, 208, 209, 232) and an onboard signal transmission device (102) designed to communicate with a portable receiver device (3) to apply a remote control procedure, said signal transmission device being provided with a transmit antenna (106; 206), said transmit antenna comprising at least one closed conductive loop (106; 206) to generate a magnetic field (B), said conductive loop being configured so as to follow at least one of said walls along a detection area in which the presence of the portable receiver device must be detected, **characterized by** the fact that said conductive loop comprises at least one conductive wall (109; 207, 208, 209, 232) of said vehicle.

2. Vehicle according to Claim 1, **characterized by** the fact that said at least one conductive wall comprises at least one of a floor wall (109; 209), a roof wall (232) and a side bodywork wall (207, 208) of said vehicle.

3. Vehicle according to either of Claims 1 and 2, **characterized by** the fact that said conductive loop comprises at least one conductive cable (111) following at least one of said walls.

4. Vehicle according to Claim 3, **characterized by** the fact that said or each conductive cable (111) is connected to said conductive wall (109) by a crow's foot electrical connector (129) so as to diffuse the electrical current passing through said conductive cable into said conductive wall.

5. Vehicle according to Claim 3 or 4, **characterized by** the fact that said or each conductive cable (111, 112) is extended in a longitudinal or lateral direction of the vehicle (101) along one of the bottom and top surfaces of said floor wall.

6. Vehicle according to one of Claims 1 to 5, **characterized by** the fact that said conductive loop (206) is configured to surround said detection area (204).

7. Vehicle according to one of Claims 1 to 6, **characterized by** the fact that said conductive loop (206) is fully formed by conductive walls (207, 208, 209, 232) of said vehicle (201) linked in the form of a ring.

8. Vehicle according to Claim 7, **characterized by** the fact that said conductive walls comprise a roof wall (232), a floor wall (209), and two side pillars (233) linking said roof and floor walls.

9. Vehicle according to Claim 7 or 8, **characterized by** the fact that it comprises a number of conductive loops surrounding a number of separate areas of said interior space.

10. Vehicle according to one of Claims 1 to 9, **characterized by** the fact that said transmit antenna (106; 206) is fed via a transformer (20; 220) comprising a low reluctance magnetic circuit (23; 223, 233) respectively crossing a primary winding (19, 219) and a secondary winding (22; 206) feeding said conductive loop.

11. Vehicle according to Claim 10 taken in combination in Claim 8, **characterized by** the fact that said secondary winding (206) is formed by said conductive walls (207, 208, 209, 232) linked in the form of a ring, said magnetic circuit (223) being disposed against at least one (208) of said conductive walls.
